Europäisches Patentamt

European Patent Office

Office européen des brevets

(11) Publication number: **0 459 966 A2**

(19)

(12) # EUROPEAN PATENT APPLICATION

(21) Application number: **91850146.1**

(51) Int. Cl.[5] : **F16K 1/30**

(22) Date of filing: **30.05.91**

(30) Priority: **30.05.90 SE 9001944**

(43) Date of publication of application:
**04.12.91 Bulletin 91/49**

(84) Designated Contracting States:
**AT BE CH DE DK ES FR GB GR IT LI LU NL SE**

(71) Applicant: **GCE GAS CONTROL EQUIPMENT
AB
Box 21044
S-200 21 Malmö (SE)**

(72) Inventor: **Kihlberg, Yngve
Ingelstadsvägen 4
S-232 54 Akarp (SE)**
Inventor: **Hobbs, Robert Baynham
9 Liverpool Road North
Ormskirk, Lancashire L40 5TN (GB)**

(74) Representative: **Rostovanyi, Peter et al
AWAPATENT AB Box 5117
S-200 71 Malmö (SE)**

(54) Arrangement in gas regulator.

(57)    Arrangement in a gas regulator intended to be connected to a gas holder, to permit using the regulator also as shut-off and filling valve for the gas holder. The regulator is of the cocurrent type and contains a differential pressure piston having different cross-sectional areas on the upper and the lower part thereof, which parts are sealed (at 20 and 10, respectively) with respect to the regulator housing (1). Between the upper part of the piston and the regulator housing is provided a spring (11) tending to move the piston away from the valve seat (5). The piston is manually displaceable towards the valve seat (5) by means of an operating member (12) acting on the upper part of the piston. The regulator also comprises a safety valve (14, 15). Connecting means to the regulator for filling the gas holder and/or the outlet (22) from the safety valve of the regulator comprises devices (19, 21, 27, 33) which, when the gas holder is being filled, permit supplying gas into the regulator space (23) defined between the regulator housing (1) and the differential pressure piston (6) between the upper (20) and the lower (10) seals of the piston with respect to the valve housing (1), the regulator spring (11) maintaining the piston in a lifted position with respect to the valve seat (5), and also permit closing the outlet (22) from the safety valve.

EP 0 459 966 A2

*Fig 1*

The present invention relates to an arrangement in a gas regulator intended to be connected to a gas holder, to permit using the regulator also as shut-off and filling valve for the gas holder, which regulator is of the cocurrent type and contains a differential pressure piston having different cross-sectional areas on the upper and the lower part thereof, the upper and the lower part of the piston being sealed with respect to the regulator housing, and there being provided between the upper part of the piston and the regulator housing a spring tending to move the piston away from the valve seat, said piston being manually displaceable towards the valve seat by an operating means acting on the upper part of the piston, and said regulator comprising a safety valve which is adapted, when gas is distributed from the gas holder, to open to the ambient atmosphere via its outlet when a predetermined pressure in the gas distribution line is exceeded.

In gas holders, use is normally made of a shut-off valve whose inlet connection is screwed in the gas holder and whose outlet connection is connected to a gas regulator, by means of which a suitable gas pressure is set for gas distribution. This being the case, there is now a need for a gas regulator that can also serve both as a shut-off and as a filling valve. Thus, the regulator should permit being connected directly to the gas holder and, hence, accommodated in a conventionally covered protective cap of the gas holder. A further desideratum is that the regulator when being opened should immediately give the desired working pressure, e.g. from 200 bar in the gas holder to a desired working pressure in the gas distribution line. The object of the present invention is to provide an arrangement in the gas regulator which meets these requirements.

The arrangement according to the invention is characterised in that connecting means to the regulator for filling the gas holder and/or the outlet from the safety valve of the regulator comprises means which, when the gas holder is being filled, permit supplying gas into the regulator space defined between the regulator housing and the differential pressure piston between the upper and the lower seals of the piston with respect to the regulator housing, said regulator spring maintaining the piston in a lifted position with respect to the valve seat, and also permit closing the outlet from the safety valve.

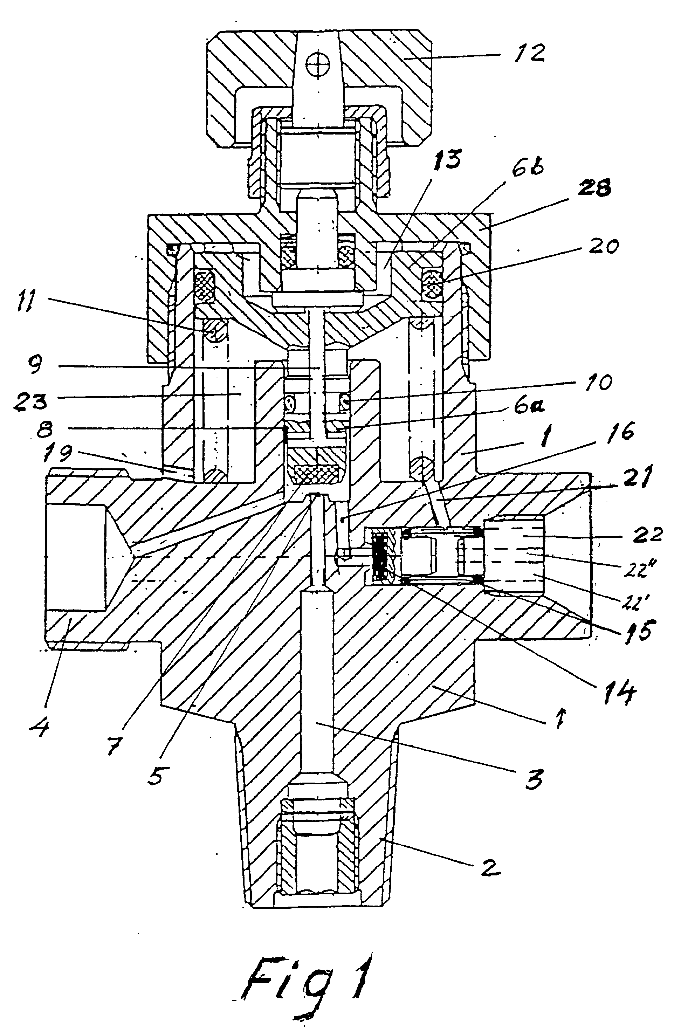

The invention will be described in more detail hereinafter with reference to the accompanying drawings in which Fig. 1 is a cross-section of the gas regulator, and Figs 2 and 3 show the same regulator with filling and shut-off means.

The gas regulator comprises a valve housing 1 provided at its base portion with an inlet connection 2 which can be screwed in a gas holder (not shown). The inlet connection 2 has a gas duct 3 opening in the valve seat 5 of the regulator. A piston 6, whose end surface is provided with a sealing stud 7, is adapted to engage the valve seat. Further, there is provided in the valve housing a channel which opens into the regulator outlet connection 4, to which a gas distribution or filling line can be connected. The piston 6 is designed as an integral piece and has a lower part 6a and an upper part 6b having a relatively larger effective cross-sectional area. The lower part 6a seals against the valve housing by means of a sealing ring 10. Under the sealing ring 10 there is however defined a gap 8 between the piston and the valve housing. This gap communicates through a radial channel 9a with an axial channel 9b in the piston, which opens into the space 13 over the upper part 6b of the piston. The piston part 6b seals against the valve housing by means of an annular seal 20. Between the part 6b and the valve housing is disposed a spring 11 tending to urge the piston 6 upwards. The piston can be moved downwards by turning the regulator knob 12 and the associated pressure shoe engaging the upper part 6b of the piston. After sufficient turning of the regulator knob 12, the sealing stud 7 will be pressed against the valve seat 5, thus closing the regulator. When the knob 12 is turned in the opposite direction, the sealing stud will be removed from the valve seat and gas will flow out towards the outlet connection 4. At the same time gas flows through the gap 8 and the channels 9a, 9b into the space 13 over the piston. The piston thus acts as a differential pressure piston, and the regulator in the illustrated embodiment is of the cocurrent type. When the pressure in the gas holder drops, the piston will open to a greater extent.

The regulator also has a safety valve which by a channel 16 communicates with the space at the valve seat 5. The safety valve comprises, inter alia, a piston 14 which is biased by a spring member 15 to engage a seat at the mouth of the channel 16. The safety valve opens to the ambient atmosphere through an outlet pipe socket 22 at a predetermined, low pressure above a predetermined working pressure in the gas distribution line connected to the outlet connection 4. A stop 22' having outlet channels in its external face and a through bore 22" is screwed into the pipe socket 22.

To permit filling the gas holder, the valve housing 1 has a gas supply channel 19 for communicating with filling means (to be described in more detail hereinafter) which is applied to the outlet connection 4. For filling the gas holder, the gas is supplied both through the channel 19 into the regulator space 23 located under the upper part 6b of the piston and accommodating the regulator spring 11, and through the outlet connection 4 into the space at the valve seat 5. The valve housing further has a channel 21 between the regulator space 23 and the safety valve. Gas supplied through the channel 21 causes the piston 14 of the safety valve to remain pressed against its seat, i.e. remain closed, since the pressure on each side of the piston is equally great. The regulator piston 6 is held in a lifted position with respect to the valve seat 5 by means of the spring, since the piston is acted on by the same gas pressure in the space 13 above the upper piston part 6b as in the regulator space 23. The piston 6 remains in this lifted position until the desired pressure has been attained in the gas holder. Once this pressure has been attained, the filling means is removed from the outlet connection 4. The gas will then be drained from the regulator space 23 into the ambient atmosphere through the channel 19. The gas in the safety valve 14, 15 will be drained through the channel 21, the regulator space 23 and the channel 19 into the ambient atmosphere. This arrangement only necessitates dimensioning the screw cap 28 to withstand high pressures.

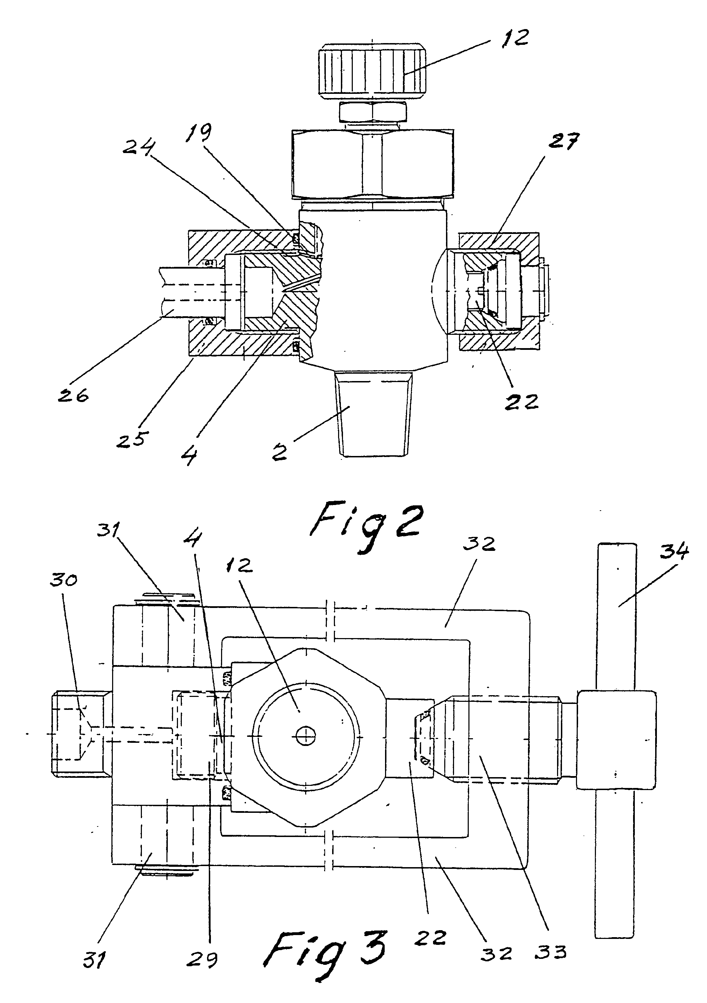

During the filling process, the outlet pipe socket 22 disposed between the safety valve and the ambient atmosphere should be closed by a suitable closure means. Figs 2 and 3 illustrate examples of such a closure means which is combined with a filling means for filling gas through the outlet connection 4. In Fig. 2, a connecting means 25 is screwed on to the outlet connection 4. The gas filling line 26 is connected to the connecting means which is formed with a groove 24 cooperating with the channel 19 in the valve housing 1. In this manner, gas can be supplied into the regulator space 23. Further, gas can be supplied through the channel 21 to the safety valve 14, 15. In order that gas should not escape into the atmosphere, the outlet pipe socket 22 of the safety valve has a closure sleeve 27 screwed on to the outlet socket and removed when the filling operation is completed. Of course, the channel 19 can be provided in the outlet connection 4 itself, whereby the groove 25 can be dispensed with.

Fig. 3 shows another embodiment of the connecting means. It here comprises a member 29 which can be pressed into the outlet connection 4 by means of a yoke device 32 mounted in pivot pins 31. Once the member 29 has been inserted in the connection 4, the yoke device is passed over the regulator, and a closure means 33 mounted in the opposite side of the yoke device is introduced in the pipe socket 22 and screwed in place by means of the turning device 34. In this manner, both the connecting member 29 and the closure means 33 are locked. When the filling operation has been completed, these two elements are removed.

The regulators described above have both a channel 19 and a channel 21. However, it is possible to dispense with one of these channels.

When only the channel 19 is arranged, it cooperates during the filling operation, as mentioned above, with a groove 24 or a duct in the connecting means. A closure means closes during the filling operation the outlet pipe socket 22 of the safety valve. The closure means is designed e.g. as shown in Fig. 2, but has a forwardly projecting pin for passing through the bore 22″ of the stop 22′ and pressing the piston 14 of the safety valve against its seat. After completed filling, the closure means is removed, the safety valve and the regulator space being drained through the channel 19 to the ambient atmosphere 19.

When only the channel 21 is arranged, use is made of a closure means which both closes the pipe outlet socket 22 of the safety valve, and is adapted during the filling operation to release the piston of the safety valve from its seat. Gas can then pass from the valve seat of the regulator through the channel 16 and the channel 21 into the regulator space 23. After completed filling, the closure means is removed, the regulator space and the safety valve being drained through the channels 21 and 16 and the pipe socket 22 to the ambient atmosphere. The combined closure and valve-opening means may consist of a sleeve, as shown in Fig. 2, with a separate, sealed pin which is screwable externally of the sleeve and which cooperates with a threaded bore in the piston 14, such that this can be pulled away from its seat.

The invention described above thus provides a regulator which also comprises the functions of a shut-off and filling valve. The regulator can be screwed directly in the gas holder and has such dimensions that it can be accommodated in a conventional protective cap of the gas holder. The regulator is further so dimensioned that, when being opened, it provides the desired working pressure in the gas distribution line.

## Claims

1. Arrangement in a gas regulator intended to be connected to a gas holder, to permit using the regulator also as shut-off and filling valve for the gas holder, which regulator is of the cocurrent type and contains a differential pressure piston having different cross-sectional areas on the upper and the lower part thereof, the upper and the lower part of the piston being sealed (at 20 and 10, respectively) with respect to the regulator housing (1), and there being provided between the upper part of the piston and the regulator housing a spring (11) tending to move the piston away from the valve seat (5), said piston being manually displaceable towards the valve seat (5) by an operating means (12) acting on the upper part of the piston, and said regulator comprising a safety valve (14, 15) which is adapted, when gas is distributed from the gas holder, to open to the ambient atmosphere via its outlet (22) when a predetermined pressure in the gas distribution line is exceeded, **characterised** in that connecting means (4, 19, 23, 25, 26) to the regulator for filling the gas holder and/or the outlet (22) from the safety valve of the regulator comprises means (19, 21, 27, 33) which, when the gas holder is being filled, permit supplying gas into the regulator space (23) defined between the regulator housing (1) and the differential pressure piston (6) between the upper (20) and the lower (10) seals of the piston with respect to the regulator housing (1), said regulator spring (11) maintaining the piston in a lifted position with respect to the valve seat (5), and also permit closing the outlet (22) from the safety valve.

2. Arrangement as claimed in claim 1, in which the safety valve is of the piston type, **characterised** in that a first channel (19) is arranged between said regulator space (23) and the ambient atmosphere for cooperating with the gas supply duct of the connecting means (25, 26) for gas filling, whereby to permit filling said regulator space (23) with gas, and that a second channel (21) is arranged between said regulator space (23) and said safety valve (14, 15), such that the safety valve piston is subjected to the same pressure on each side during gas filling and thus remains closed.

3. Arrangement as claimed in claim 1, in which the safety valve is of the piston type, **characterised** in that a channel (19) is arranged between said regulator space (23) and the ambient atmosphere for cooperating with the gas supply duct of the connecting means for gas filling, whereby to permit filling said regulator space (23) with gas, and that the means for closing the outlet (22) of the safety valve is adapted to maintain the piston (14) of the safety valve pressed against its seat during gas filling.

4. Arrangement as claimed in claim 1, in which the safety valve is of the piston type, **characterised** in that a channel (21) is arranged between said regulator space (23) and the safety valve (14, 15) and that the means for closing the outlet (22) of the safety valve is adapted to expose the piston (14) of the safety valve from its seat during gas filling, whereby to permit filling said regulator space (23) with gas.

5. Arrangement as claimed in any one of claims 1-4, **characterised** in that the connecting means comprises the gas outlet connection (4) of the regulator.

Fig 1

Fig 2

Fig 3